# EUROPÄISCHE PATENTANMELDUNG

(11) **EP 1 992 647 A1**
(43) Veröffentlichungstag der Anmeldung: **19.11.2008**
(21) Anmeldenummer: 08008551.7
(22) Anmeldetag: 07.05.2008
(51) Int. Cl.: C08F 8/42, C08F 8/32, C08F 2/38, C09D 133/14, C08F 220/32

(54) **Silanlacke aus Aminosilanen und epoxyfunktionellen Polyacrylaten**

(30) Priorität: 18.05.2007 DE 102007023282
(71) Anmelder: Bayer MaterialScience AG, 51368 Leverkusen (DE)
(72) Erfinder: Ludewig, Michael, Dr., 51373 Leverkusen (DE); Köhler, Burkhard, Dr., 34289 Zierenberg (DE); Hertrampf, Reinhard, 40764 Langenfeld (DE); Wamprecht, Christian, Dr., 41472 Neuss (DE)

(57) **Zusammenfassung**

Gegenstand der Erfindung sind Silanlacke, die durch Reaktion von Aminosilanen mit Glycidyl(meth)acrylat-Copolymeren erhältlich sind.

## Beschreibung

Gegenstand der Erfindung sind Silanlacke, die durch Reaktion von Aminosilanen mit Glycidyl(meth)acrylat-Copolymeren erhältlich sind.

JP 2003-337324 beschreibt Reaktionsprodukte aus Glycidylmethacrylat-Copolymeren mit Alkylaminosilanen, wobei die sekundäre Aminogruppe am Silan die Vernetzungsneigung während der Herstellung vermindern soll. Alkylaminosilane sind technisch weniger gut zugänglich als Aminosilane.

JP 1987-108137 und JP 1985-292453 beschreiben die Umsetzung von Glycidylmethacrylat-Copolymeren oder Allylgylcidylether-Copolymeren mit Addukten aus Aminosilanen und Epoxysilanen.

JP1982-51179 beschreibt die Reaktion von Glycidylmethacrylatcopolymeren mit Aminoethylaminopropyltrimethoxysilan. Nachteilig an diesen Systemen ist ihre mangelnde Lagerstabilität..

Es bestand daher die Aufgabe, lagerstabile Silanlacke bereitzustellen, die durch einfache Reaktion von Aminoalkyltrialkoxysilanen mit Glycidylmethacrylat-Copolymeren zugänglich sind.

Es wurde nun gefunden, dass sich Glycidylmethacrylatcopolymere gerade dann gut mit aminofunktionellen Silanen zu Lacken formulieren lassen, wenn bei ihrer Herstellung Mercaptosilane zur Molekulargewichtsregelung eingesetzt werden.

Gegenstand der Erfindung ist daher ein Verfahren zur Herstellung alkoxysilylgruppenhaltiger Polymere, bei dem
A) ein Glycidylmethacrylatcopolymer durch Polymerisation von
   a) 5 bis 40 Gew.-% Glycidylmethacrylat und gegebenenfalls Glycidylacrylat
   b) 50 bis 93,9 Gew.-% Vinylmonomeren
   c) 1 bis 20 Gew.-% Mercaptosilanen und
   d) 0,1 bis 5 Gew.-% radikalischen Initiatoren
   hergestellt wird, welches anschließend
B) mit Aminoalkyltrialkoxysilanen unter zumindest anteiliger Reaktion und Öffnung von Epoxy-Gruppen des Glycidyl(meth)acrylat-Copolymeren umgesetzt wird.

Die Polymerisationstemperatur zu Glycidyl(meth)acrylat-Copolymeren wird üblicherweise derart gewählt, dass die Halbwertszeit der verwendeten Initiatoren 5 min bis 10 Stunden beträgt. Bevorzugt erfolgt die Polymerisation bei 40 bis 180°C.

Die Reaktionsdauer beträgt bevorzugt 1 bis 48 Stunden.

Die Reaktion wird bevorzugt in inerten Lösungsmitteln, wie Toluol, Ethylacetat, Butylacetat, MPA, Xylol, Isopropanol, Butanol, durchgeführt, wobei bezogen auf die Menge der zu polymerisierenden Komponenten a) bis d) 0,1 bis 2 Gewichtsteile Lösungsmittel eingesetzt werden.

Die Reaktion kann im batch-Verfahren, Kontiverfahren oder vorzugsweise im semi batch Verfahren (Zudosierung der Reaktanden) durchgeführt werden. Die Dosierung der Komponenten a) bis d) kann einzeln oder in Gemischen erfolgen.

In Komponente a) wird Glycidylmethacrylat gegebenenfalls in Mischungen mit Glycidylacrylat, vorzugsweise nur Glycidylmethacrylat, eingesetzt.

In Komponente b) werden die Acrylsäureester oder Methacrylsäureester von aliphatischen C1-C22 Monoolen, cycloaliphatischen C5-C27 Monoolen oder araliphatischen C7-C14-Monoolen, oder von Tetrahydrofurfurylalkohol oder (Poly)ethylenglykolmonomethylether eingesetzt. Ebenfalls können als Vinylmonomere Styrol, alpha-Methylstyrol, 3- oder 4-Methylstyrol, Vinylacetat, Vinylester oder Acrylnitril eingesetzt werden.

In Komponente c) werden Mercaptopropyltrialkoxysilane, vorzugsweise Mercaptopropyltrimethoxysilan, eingesetzt.

In Komponente d) werden Azoverbindungen, wie AIBN, oder Peroxide, wie Benzoylperoxid, Perester, Di-tert-butylperoxid, Cumylperoxid, Ketonperoxide oder Perkohlensäureester, eingesetzt.

Bevorzugt werden bei der Herstellung des Glycidylmethacrylatcopolymers
10 bis 30 Gew.-% Glycidylmethacrylat und gegebenenfalls Glycidylacrylat
53 bis 84,8 Gew.-% Vinylmonomeren
5 bis 15 Gew.-% Mercaptosilanen und
0,2 bis 2 Gew.-% radikalische Initiatoren
eingesetzt.

In B) werden bevorzugt Aminopropyltrialkoxysilane, besonders bevorzugt Aminopropyltrimethoxysilan eingesetzt.

Die Zugabe in Stufe B) kann allein oder gelöst in Lösungsmitteln, wie Toluol, Ethylacetat, Butylacetat, MPA, Xylol, Isopropanol, Butanol, erfolgen. Die Reaktionstemperatur beträgt 15 bis 50°C, die Reaktionsdauer 30 Minuten bis 7 Tage.

Das Verhältnis von primären Aminogruppen der Aminoalkyltrialkoxysilanen zu Epoxygruppen des Polymers aus A) beträgt bevorzugt 1,2 bis 5, besonders bevorzugt 1,4 bis 2,4.

Ein weiterer Gegenstand der Erfindung sind die so erhältlichen alkoxysilylgruppenhaltigen Polymere sowie Lacke sowie die daraus erhältlichen Beschichtungsmittel die diese enthalten.

Bevorzugt enthalten diese Beschichtungsmittel ferner 0 bis 5 Gew.-%, bevorzugt 0,1 bis 3 Gew.-% an Katalysatoren, wie Sulfonsäuren oder Zinnverbindungen

Bei der Applikation werden die Beschichtungsmittel durch Sprühen, Rakeln oder Tauchen, vorzugsweise durch Sprühen, auf ein Substrat aufgetragen und bei Temperaturen von 15 bis 250°C 1 Minute bis 7 Tage getrocknet.

Ebenfalls ein Gegenstand dieser Erfindung sind Beschichtungen erhältlich unter Verwendung der erfindungsgemäßen alkoxysilylgruppenhaltigen Polymere.

### Beispiele:

Sofern nicht abweichend vermerkt sind alle Prozentangaben als Gewichtsprozent zu verstehen.

### Beispiel 1

Man tropft innerhalb von 2h bei 80°C 142g Glycidylmethacrylat, 100g Methylmethacrylat, 158g Butylacrylat, 400g Isopropanol, 40g Mercaptopropyltrimethoxysilan und 4g AIBN in einen Kolben und lässt 4h nachrühren. Dann werden nach Abkühlen unter 30°C 300g Aminopropyltrimethoxysilan und 300g Isopropanol zugetropft und 7 Tage bei 25°C stehen gelassen.

### Beispiel 2

Man tropft innerhalb von 2h bei 80°C 142g Glycidylmethacrylat, 458g Butylacrylat, 600g Isopropanol, 40g Mercaptopropyltrimethoxysilan und 4g AIBN in einen Kolben und lässt 4h nachrühren. Dann werden nach Abkühlen unter 30°C 300g Aminopropyltrimethoxysilan und 300g Isopropanol zugetropft und 7 Tage bei 25°C stehen gelassen.

### Beispiel 3

Man tropft innerhalb von 2h bei 80°C 142g Glycidylmethacrylat, 258g Butylacrylat, 400g Isopropanol, 40g Mercaptopropyltrimethoxysilan und 4g AIBN in einen Kolben und lässt 4h nachrühren. Dann werden nach Abkühlen unter 30°C 300g Aminopropyltrimethoxysilan und 300g Isopropanol zugetropft und 7 Tage bei 25°C stehen gelassen.

### Beispiel 4

Man tropft innerhalb von 2h bei 80°C 142g Glycidylmethacrylat, 358g Butylacrylat, 500g Isopropanol, 40g Mercaptopropyltrimethoxysilan und 4g AIBN in einen Kolben und lässt 4h nachrühren. Dann werden nach Abkühlen unter 30°C 300g Aminopropyltrimethoxysilan und 300g Isopropanol zugetropft und 7 Tage bei 25°C stehen gelassen.

### Beispiel 5

Man tropft innerhalb von 2h bei 80°C 142g Glycidylmethacrylat, 458g Methylacrylat, 600g Isosopropanol, 40g Mercaptopropyltrimethoxysilan und 4g AIBN in einen Kolben und lässt 4h nachrühren. Dann werden nach Abkühlen unter 30°C 300g Aminopropyltrimethoxysilan und 300g Isopropanol zugetropft und 7 Tage bei 25°C stehen gelassen.

### Anwendungstechnische Ausprüfung:

Die Lacke der Beispiele 1, 2, 4 und 5 wurden mit 2% Dodecylbenzolsulfonsäure (DBS) versetzt, auf einen Feststoffgehalt von 35% mit Ethylacetat eingestellt und mit 1 bar Druck in 5 Spritzgängen auf einer Sata HVLP Minijet Spritzmaschine verspritzt. RT bedeutet Raumtemperatur, eine Benzinbeständigkeit von 0 sehr gut und von 5 schlecht. Die forcierte Trocknung bei 50°C wurde in einer Wasserdampf-gesättigten Atmosphäre durchgeführt. Dabei wurden folgende Ergebnisse erhalten:

| Beispiel | 1 | 2 | 4 | 5 |
|---|---|---|---|---|
| Schichtdicke[µ] | 35 | 30 | 35 | 30 |

| Pendelhärte | | | | |
|---|---|---|---|---|
| RT 1d | 94 | 46 | 48 | 39 |
| RT 7d | 130 | 67 | 87 | 85 |
| 1d+16h 50°C | 144 | 48 | 57 | 85 |
| 7d+16h50°C | 157 | 60 | 89 | 87 |

| Benzinfestigkeit | | | | |
|---|---|---|---|---|
| RT 1d | 0 | 3 | 0 | 0 |
| RT 7d | 0 | 1 | 0 | 0 |
| 1d+16h 50°C | 0 | 2 | 0 | 0 |
| 7d+16h 50°C | 0 | 0 | 0 | 0 |

### Vergleichsbeispiel

Man verfährt wie in Beispiel 1 beschrieben, wobei anstelle von 40g Mercaptopropyltrimethoxysilan als Regler 40g Dodecylmercaptan eingesetzt wurden. Die anwendungstechnische Prüfung erfolgte wie oben beschrieben, wobei ein Film der Dicke 30µm erhalten wurde mit folgenden Werten:

| Pendelhärte | |
|---|---|
| RT 1d | 34 |
| RT 7d | 70 |
| 1d+16h 50°C | 75 |
| 7d+16h 50°C | 87 |

| Benzinfestigkeit | |
|---|---|
| RT 1d | 5 |
| RT 7d | 3 |
| 1d+16h 50°C | 3 |
| 7d+16h 50°C | 1 |

Man sieht, dass die Verwendung eines Silylgruppen-freien Reglers zu einer schlechteren Vernetzung führt (Härte und Benzinbeständigkeit).

## Patentansprüche

1. Verfahren zur Herstellung alkoxysilylgruppenhaltiger Polymere, bei dem
A) ein Glycidylmethacrylatcopolymer durch Polymerisation von
a) 5 bis 40 Gew.-% Glycidylmethacrylat und gegebenenfalls Glycidylacrylat
b) 50 bis 93,9 Gew.-% Vinylmonomeren
c) 1 bis 20 Gew.-% Mercaptosilanen und
d) 0,1 bis 5 Gew.-% radikalischen Initiatoren
hergestellt wird, welches anschließend
B) mit Aminoalkyltrialkoxysilanen unter zumindest anteiliger Reaktion und Öffnung von Epoxy-Gruppen des Glycidyl(meth)acrylat-Copolymeren umgesetzt wird.

2. Verfahren gemäß Anspruch 1, **dadurch gekennzeichnet, dass** als Vinylmonomere in b) Acrylsäureester oder Methacrylsäureester von aliphatischen C1-C22 Monoolen, cycloaliphatischen C5-C27 Monoolen oder araliphatischen C7-C14-Monoolen, oder von Tetrahydrofurfurylalkohol oder (Poly)ethylenglykolmonomethylether eingesetzt. Ebenfalls können als Vinylmonomere Styrol, alpha-Methylstyrol, 3- oder 4-Methylstyrol, Vinylacetat, Vinylester oder Acrylnitril eingesetzt werden.

3. Verfahren gemäß Anspruch 1 oder 2, **dadurch gekennzeichnet, dass** in c) Mercaptopropyltrimethoxysilan eingesetzt wird.

4. Verfahren gemäß einem der Ansprüche 1 bis 3, **dadurch gekennzeichnet, dass** in B) Aminopropyltrialkoxysilane eingesetzt werden.

5. Verfahren gemäß einem der Ansprüche 1 bis 3, **dadurch gekennzeichnet, dass** das Verhältnis von primären Aminogruppen der Aminoalkyltrialkoxysilane zu Epoxygruppen des Polymers aus A) 1,2 bis 5, beträgt.

6. Alkoxysilylgruppenhaltige Polymere erhältlich nach einem Verfahren gemäß einem der Ansprüche 1 bis 5.

7. Beschichtungsmittel umfassend wenigstens ein alkoxysilylgruppenhaltiges Polymer gemäß Anspruch 6.

8. Beschichtungen erhältlich unter Verwendung von alkoxysilylgruppenhaltigen Polymeren gemäß Anspruch 6.
